# EUROPÄISCHE PATENTSCHRIFT

(11) **EP 1 056 384 B1**
(45) Veröffentlichungstag und Bekanntmachung des Hinweises auf die Patenterteilung: **12.06.2002**
(21) Anmeldenummer: 99911604.9
(22) Anmeldetag: 19.02.1999
(51) Int. Cl.: A47J 43/25, B26B 5/00

(54) **GEMÜSEHOBEL**
VEGETABLE SLICE
MACHINE A RAPER LES LEGUMES

(30) Priorität: 26.02.1998 DE 29803375
(43) Veröffentlichungstag der Anmeldung: 06.12.2000
(73) Patentinhaber: Gottwald, Walter, 90579 Langenzenn (DE)
(72) Erfinder: Gottwald, Walter, 90579 Langenzenn (DE)
(74) Vertreter: Schuhmann, Albrecht
(86) Internationale Anmeldenummer: DE9900456
(87) Internationale Veröffentlichungsnummer: WO9943246

(56) Entgegenhaltungen:
- BE-A- 466 659
- DE-C- 865 517
- DE-U- 9 206 497
- GB-A- 2 032 260
- US-A- 2 511 909

## Beschreibung

Die Erfindung betrifft einen Gemüsehobel mit den Merkmalen des Oberbegriffs des Anspruchs 1.

Gemüsehobel für das Reiben oder Schneiden von Gemüse, bestehend aus einem Schneidbrett mit auswechselbaren Reib- Schneideinsätzen, sowie einem darunter angeordneten Auffangbehälter und einem Gemüsehalter sind aus der Praxis bekannt. In der Regel wird das Gemüse dabei mit der Hand gehalten. Bekannt sind auch elektrische Küchengeräte, bei denen das Gemüse durch einen Gemüsehalter mittels eines Stempels gegen eine rotierende Schneidscheibe gedrückt wird. Aus der US-A-25 11 909 ist zum Beispiel ein Küchenhobel bekannt (vgl oberbegriff des Anspruchs 1), bei dem ein rechteckiges Behältnis mit einem Paar seitlicher Flansche in Längsnuten eines Gestells für ein Schneidbrett geführt ist.

Aufgabe der vorliegenden Erfindung ist es, einen leicht zu handhabenden, kompakten Gemüsehobel insbesondere für das Bearbeiten von Gemüsekleinteilen, wie Knoblauchzehen zu schaffen, bei dem weitgehend vermieden werden kann, das Gemüse direkt zu berühren.

Diese Aufgabe wird mit den im kennzeichnenden Teil des Anspruchs 1 genannten Merkmalen gelöst. Fortbildungen und vorteilhafte Ausführungen der Erfindung sind in den weiteren Ansprüchen umfaßt.

Erfindungsgemäß ist ein Gemüsehobel für das Reiben oder Schneiden von Gemüse, insbesondere Gemüsekleinteilen, wie Knoblauchzehen, bestehend aus einem Schneidbrett mit auswechselbaren Reib- Schneideinsätzen, sowie einem darunter angeordneten Auffangbehälter und einem auf dem Schneidbrett bewegbaren Gemüsehalter, wobei der Gemüsehalter einen Durchgang für das Gemüse aufweist, und wobei ein Stempel vorhanden ist, der von oben in den Durchgang greift und mit dem das Gemüse auf das Schneidbrett preßbar ist. dadurch gekennzeichnet, daß das Schneidbrett wenigstens zwei Paar obere, seitliche Führungen für wenigstens zwei Paar Außenkanten des Gemüsehalters aufweist, die jeweils horizontal übereinander und vertikal nebeneinander verlaufen und daß das Schneidbrett auf dem Auffangbehälter aufsitzt.

Nach einer bevorzugten Ausführung der Erfindung weist der Durchgang einen runden oder ovalen Querschnitt aufweist und der Stempel ist mit gleichem Querschnitt mit geringem Spiel in dem Durchgang geführt. Der Durchgang ist senkrecht zu dem Schneidbrett angeordnet und der Stempel ist mit den oberen Rand des Durchgangs übergreifenden und wenigstens teilweise an diesem entlang abwärts gerichteten Lappen versehen und weist eine zu dem Schneidbrett parallel ausgerichtete Druckfläche auf, die Halteriefen, Haltenoppen, Haltekrallen oder dergleichen für das Gemüse aufweisen kann.

Nach einer vorteilhaften Ausführung der Erfindung ist der Gemüsehalter mit seitlichen Flanschen in seitlichen Führungsnuten der oberen seitlichen Führungsnuten des Schneidbretts geführt. Hierfür weist das Schneidbrett eine erste Führungsebene mit einer Ausnehmung auf, in die der Reib- oder Schneideinsatz einschiebbar ist und die seitliche, parallele Stege besitzt, zwischen denen der Gemüsehalter mit einem unteren Absatz geführt ist. Der Gemüsehalter ist mit seinen seitlichen Flanschen zwischen den Stegen und zwei diese in einem Abstand überkragenden, parallelen seitlichen Längsflanschen geführt, die so die seitlichen Führungsnuten bilden. Der Gemüsehalter weist weiter einen oberen Absatz auf, mit dem er zwischen den Längsflanschen des Schneidbretts geführt ist.

Im folgenden wird die Erfindung anhand von Zeichnungen beispielhaft näher beschrieben. Dabei zeigen:
Fig. 1 eine perspektivische Darstellung des zusammengesetzten Gemüsehobels;
Fig. 2 einen Schnitt durch die Ebene A-A von Fig. 1;
Fig. 3 eine Ansicht auf das Schneidbrett von unten.

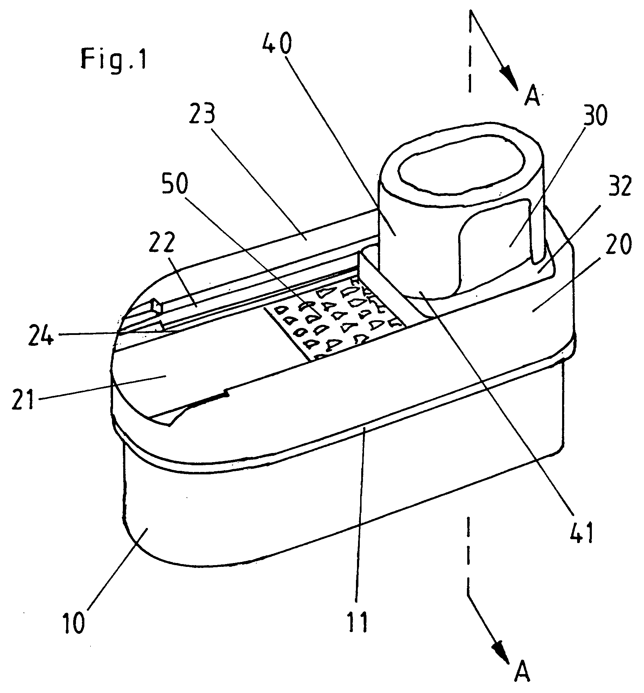

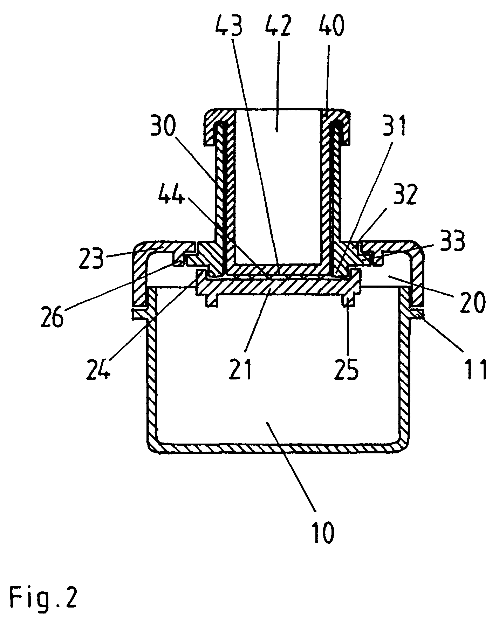

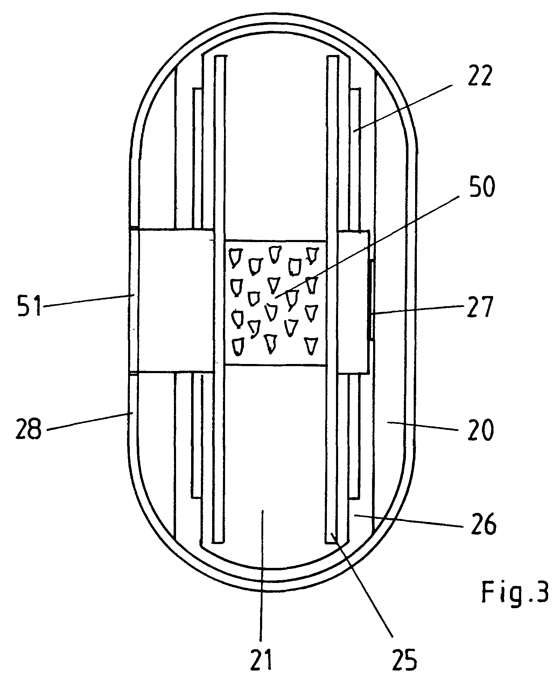

Der Gemüsehobel gemäß den Fig. 1 - 3 besteht aus fünf Einzelteilen, dem Auffangbehälter 10, dem Schneidbrett 20, dem Gemüsehalter 30, dem Stempel 40 und dem Schneid- oder Reibeinsatz 50. Der Auffangbehälter 10 weist eine längliche Wannenform mit runden Enden auf und besitzt einen umlaufenden horizontalen Flansch 11, auf dem der umlaufende untere Rand des Schneidbretts 20 aufsitzt, das im wesentlichen die gleiche Außenkontur besitzt, wie der Auffangbehälter 10, wobei der Flansch 11 in einem Abstand von der Oberkante des Auffangbehälters 10 angeordnet ist und das Schneidbrett 20 mit seinem unteren Rand den Auffangbehälter 10 seitlich und an den Enden passend übergreift. Das Schneidbrett 20 weist eine erste Führungsebene 21 oder Führungsfläche mit einer Ausnehmung (bei 50 in Fig. 3) auf, in die durch einen seitlichen Schlitz (bei 51 in Fig. 3) ein Reineinsatz 50 gesteckt ist. Der auswechselbare Reibeinsatz 50 wird durch Schlitze von zwei Längsstegen 25 an der Unterseite des Schneidbretts 20 gehalten und findet einen Anschlag in einer Halterippe 27 eines Absatzes 26 an der Unterseits des Schneidbretts 20.

Seitlich der Führungsebene 21 sind weitere Führungsmittel für den Gemüsehalter 30 angeordnet. Der Gemüsehalter 30 weist einen unteren Absatz 31 mit zwei parallelen seitlichen Kanten und einen breiteren oberen Absatz 32 mit ebenfalls parallelen seitlichen Kanten auf. An dem oberen Absatz sind seitlich Flansche 33 angeordnet, die jedoch eine geringere Höhe aufweisen, wie der oberen Absatz 32. Der Gemüsehalter 30, bildet einen langlochartigen oben und unten offenen Durchgang für das Gemüse, der senkrecht zu dem Schneidbrett 20 steht und im wesentlichen einen einheitlichen Durchmesser aufweist. In dem Durchgang ist der Stempel 40 geführt, dessen Außenkontur der Innenkontur des Durchgangs mit Spiel entspricht und der hohl, oben offen und unten mit einer Druckfläche 43 versehen ist, die zu dem Schneidbrett 20 hin ausgerichtete Haltekrallen 44 besitzt. Der Stempel 40 greift mit seiner Wand seitlich über die Oberkante des Gemüsehalters 30 und besitzt vordere und hintere Lappen, die außen entlang des Durchgangs des Gemüsehalters 30 ein Stück nach unten geführt sind und eine Handhabe für das Bewegen des Stempels 40 in der vertikalen und des Stempels 40 mit dem Gemüsehalter 30 in der horizontalen Richtung entlang der Führungsebene 21 bietet.

Die seitliche, mit Spiel beaufschlagte Führung des Gemüsehalters 30 seitlich in dem Schneidbrett 20 erfolgt zunächst dadurch, daß der untere Absatz 31 mit seinen parallelen Kanten zwischen zwei seitlich auf der Führungsebene 21 parallel angeordneten Stegen 24 geführt ist. Gleichzeitig greifen die Flansche 33 über diese Stege 24 und sind außen zwischen durch Aussparungen 22 des Absatzes 26 gebildeten Stegen geführt, wobei diese Stege unterhalb seitlicher paralleler Längsflansche 23 des Schneidbretts 20 angeordnet sind, die die Flansche 33 des Gemüsehalters 30 überkragen und dritte Führungsstege bilden, zwischen denen der obere Absatz 32 des Gemüsehalters 30 mit seinen parallelen Aussenkanten geführt ist. Diese mehrfache Führung bewirkt, daß der Gemüsehalter in Längsrichtung verkantungsfrei auf der Führungsebene hin- und hergeschoben werden kann und dabei auch in vertikaler Richtung nicht abhebt. Die Führungsebene 21 ist nach einem Ende hin geschlossen und nach dem anderen Ende hin offen ausgeführt, so daß der Gemüsehalter über das offene Ende eingeführt und herausgenommen werden kann.

## Patentansprüche

1. Gemüsehobel für das Reiben oder Schneiden von Gemüse, insbesondere Gemüsekleinteilen, wie Knoblauchzehen,
bestehend aus einem Schneidbrett mit auswechselbaren Reib- Schneideinsätzen, sowie einem darunter angeordneten Auffangbehälter und einem auf dem Schneidbrett bewegbaren Gemüsehalter,
wobei der Gemüsehalter (30) einen Durchgang für das Gemüse aufweist,
und wobei ein Stempel (40) vorhanden ist, der von oben in den Durchgang greift und mit dem das Gemüse auf das Schneidbrett (20) preßbar ist.
**dadurch gekennzeichnet,**
**daß** das Schneidbrett (20) wenigstens zwei Paar obere, seitliche Führungen für wenigstens zwei Paar Außenkanten des Gemüsehalters (30) aufweist, die jeweils horizontal übereinander und vertikal nebeneinander verlaufen,
und **daß** das Schneidbrett (20) auf dem Auffangbehälter aufsitzt.

2. Gemüsehobel nach Anspruch 1,
**dadurch gekennzeichnet,**
**daß** der Durchgang einen runden, langlochartigen oder ovalen Querschnitt aufweist und daß der Stempel (40) mit gleichem Querschnitt mit geringem Spiel in dem Durchgang geführt ist.

3. Gemüsehobel nach Anspruch 1 oder 2,
**dadurch gekennzeichnet,**
**daß** der Durchgang senkrecht zu dem Schneidbrett (20) angeordnet ist.

4. Gemüsehobel nach einem der vorhergehenden Ansprüche,
**dadurch gekennzeichnet,**
**daß** der Stempel (40) mit den oberen Rand des Durchgangs übergreifenden und wenigstens teilweise an diesem entlang abwärts gerichteten Lappen versehen ist.

5. Gemüsehobel nach einem der vorhergehenden Ansprüche,
**dadurch gekennzeichnet,**
**daß** der Stempel (40) eine zu dem Schneidbrett (20) parallel ausgerichtete Druckfläche (43) aufweist.

6. Gemüsehobel nach Anspruch 5,
**dadurch gekennzeichnet,**
**daß** die Druckfläche (43) Halteriefen, Haltenoppen, Haltekrallen (44) oder dergleichen für das Gemüse aufweist.

7. Gemüsehobel nach einem der vorhergehenden Ansprüche,
**dadurch gekennzeichnet,**
**daß** der Gemüsehalter mit seitlichen Flanschen (33) in seitlichen Führungsnuten der oberen seitlichen Führungsnuten des Schneidbretts (20) geführt ist.

8. Gemüsehobel nach Anspruch 7,
**dadurch gekennzeichnet,**
**daß** das Schneidbrett (20) eine erste Führungsebene (21) mit einer Ausnehmung aufweist, in die der Reib- oder Schneideinsatz (50) einschiebbar ist,
**daß** die erste Führungsebene (21) seitliche, parallele Stege (24) aufweist, zwischen denen der Gemüsehalter mit einem unteren Absatz (31) geführt ist,
**daß** der Gemüsehalter mit seinen seitlichen Flanschen (33) zwischen den Stegen (24) und zwei diese in einem Abstand überkragenden, parallelen seitlichen Längsflanschen (23) geführt ist,
und **daß** der Gemüsehalter einen oberen Absatz (32) aufweist, mit dem er zwischen den Längsflanschen (23) des schneidbretts (20) geführt ist.

9. Gemüsehobel nach Anspruch 8,
**dadurch gekennzeichnet,**
**daß** die erste Führungsebene (21) an einer Längsseite mit einem Anschlag für den Gemüsehalter versehen ist.

## Claims

1. A vegetable slicer for grating or cutting vegetables, particularly small pieces of vegetable such as garlic cloves,
consisting of a cutting board with interchangeable grater/cutter inserts, and also a collecting receptacle arranged underneath and a vegetable holder movable on the cutting board,
wherein the vegetable holder (30) has a passage for the vegetable,
and wherein a pusher (40) is provided which extends from above into the through passage and with which the vegetable may be pressed onto the cutting board (20),
**characterised**
**in that** the cutting board (20) has at least two pairs of upper, lateral guides for at least two pairs of external edges of the vegetable holder (30) which extend horizontally one above the other and vertically adjacent one another in each case, and in that the cutting board (20) rests on the collecting receptacle.

2. A vegetable slicer according to Claim 1,
**characterised**
**in that** the passage has a round, longitudinal slot-like or oval cross-section, and in that the pusher (40) having the same cross-section is guided with little clearance in the passage.

3. A vegetable slicer according to Claim 1 or 2,
**characterised**
**in that** the passage is arranged so as to be perpendicular to the cutting board (20).

4. A vegetable slicer according to any one of the preceding Claims,
**characterised**
**in that** the pusher (40) is provided with lugs overlapping the upper margin of the passage and projecting at least partially downwardly along the said passage.

5. A vegetable slicer according to any one of the preceding Claims,
**characterised**
**in that** the pusher (40) has a pressing surface (43) oriented parallel to the cutting board (20).

6. A vegetable slicer according to Claim 5,
**characterised**
**in that** the pressing surface (43) has holding grooves, holding studs, holding spikes (44) or the like for the vegetable.

7. A vegetable slicer according to any one of the preceding Claims,
**characterised**
**in that** lateral flanges (33) of the vegetable holder are guided in lateral guide grooves of the upper lateral guide grooves of the cutting board (20).

8. A vegetable slicer according to Claim 7,
**characterised**
**in that** the cutting board (20) has a first guide plane (21) with a recess into which the grater or cutter insert (50) may be inserted,
**in that** the first guide plane (21) has lateral, parallel bars (24) between which a lower step (31) of the vegetable holder is guided,
**in that** the lateral flanges (33) of the vegetable holder are guided between the bars (24) and two parallel, lateral longitudinal flanges (23) overhanging the said bars at a distance therefrom,
and **in that** the vegetable holder has an upper step (32) with which it is guided between the longitudinal flanges (23) of the cutting board (20).

9. A vegetable slicer according to Claim 8,
**characterised in that** the first guide plane (21) is provided on one longitudinal side with a stop for the vegetable holder.

## Revendications

1. Râpe à légumes pour râper ou découper des légumes, en particulier de petits morceaux de légumes, comme des gousses d'ail,
se composant d'une planche de découpage avec des éléments de râpage et de découpage interchangeables, ainsi qu'avec un récipient de réception disposé sous ceux-ci et avec un godet à légumes mobile sur la planche de découpage,
dans laquelle le godet à légumes (30) présenté une ouverture de passage pour les légumes,
et dans laquelle il est prévu un tampon (40), qui s'engage par le haut dans l'ouverture de passage et à l'aide duquel
les légumes peuvent être pressés sur la planche de découpage (20),
**caractérisée en ce que**
la planche de découpage (20) présente au moins deux paires de guides latéraux supérieurs pour au moins deux paires de faces extérieures du godet à légumes (30), qui sont chaque fois orientés les uns au-dessus des autres en direction horizontale et les uns à côté des autres en direction verticale,
et **en ce que** la planche de découpage (20) est posée sur le récipient de réception.

2. Râpe à légumes suivant la revendication 1, **caractérisée en ce que** l'ouverture de passage présente une section transversale ronde, allongée ou ovale et **en ce que** le tampon (40) de même section transversale est guidé dans l'ouverture de passage avec un faible jeu.

3. Râpe à légumes suivant la revendication 1 ou 2, **caractérisée en ce que** l'ouverture de passage est disposée perpendiculairement à la planche de découpage (20).

4. Râpe à légumes suivant l'une quelconque des revendications précédentes, **caractérisée en ce que** le tampon (40) est pourvu de pattes enveloppant le bord supérieur de l'ouverture de passage et dirigées vers le bas au moins en partie le long de celui-ci.

5. Râpe à légumes suivant l'une quelconque des revendications précédentes, **caractérisée en ce que** le tampon (40) présente une face de pressage (43) orientée parallèlement à la planche de découpage (20).

6. Râpe à légumes suivant la revendication 5, **caractérisée en ce que** la face de pressage (43) présente des cannelures de maintien, des picots de maintien, des griffes de maintien (44) ou analogues pour les légumes.

7. Râpe à légumes suivant l'une quelconque des revendications précédentes, **caractérisée en ce que** le godet à légumes est guidé par des brides latérales (33) dans des rainures de guidage latérales des rainures de guidage latérales supérieures de la planche de découpage (20).

8. Râpe à légumes suivant la revendication 7, **caractérisée en ce que** la planche de découpage (20) présente un premier plan de guidage (21) avec un évidement dans lequel l'élément de râpage ou de découpage (50) peut être introduit, **en ce que** le premier plan de guidage (21) présente des nervures latérales parallèles (24), entre lesquelles le godet à légumes est guidé par un épaulement inférieur (31), **en ce que** le godet à légumes est guidé par ses brides latérales (33) entre les nervures (24) et deux brides longitudinales latérales parallèles (22) surplombant celles-ci à distance, et **en ce que** le godet à légumes présente un épaulement supérieur (32), avec lequel il est guidé entre les brides longitudinales (23) de la planche de découpage (20).

9. Râpe à légumes suivant la revendication 8, **caractérisée en ce que** le premier plan de guidage (21) est pourvu, sur un côté longitudinal, d'une butée pour le godet à légumes.
